# EUROPEAN PATENT APPLICATION

(11) **EP 1 494 395 A1**
(43) Date of publication of application: **05.01.2005**
(21) Application number: 03292229.6
(22) Date of filing: 01.07.2003
(51) Int. Cl.: H04L 12/28, H04L 29/06

(54) **Method and authentication module for providing access to a target network via a wireless local area network WLAN**

(71) Applicant: ALCATEL, 75008 Paris (FR)
(72) Inventor: Maillard, Herve, 91430 Igny (FR)
(74) Representative: Dreiss, Fuhlendorf, Steimle & Becker

(57) **Abstract**

The present invention relates to a method of accessing a target network (1) with a terminal (2) via a wireless local area network (WLAN) (3), comprising the following steps:
- providing in said terminal (2) cryptographic keys comprising at least a first key (k1), in particular a private key, and a second key (k2), in particular a public key,
- generating in said terminal (2) a signature depending on at least said first key (k1),
- sending said signature and said second key (k2) to a first network element, in particular an access controller (AC) of said WLAN (3),
- verifying said signature within said access controller (AC),
- sending identification information, which preferably depends on said second key (k2), from said access controller (AC) to a second network element, in particular an access server (AS) comprising subscription information,
- checking said identification information with said subscription information for compatibility within said access server (AS),
- authorising the access of the terminal (2) to said WLAN (3).

## Description

The present invention relates to a method of accessing a target network with a terminal via an access network, in particular a wireless local area network (WLAN). The present invention also relates to an authentication module.

Said method is known from prior art and there are various access scenarios, wherein a user of said terminal e.g. desires to access the internet as the target network via said access network. Said access network may e.g. be a WLAN.

In a first case, said user may be a subscriber of the domain which owns the WLAN. Secondly, the user may be a subscriber of an arbitrary fixed or radio network. At least in the second case, an authorisation of the user e.g. for accessing the internet or another target network or other services is required.

Prior art solutions for authentication or authorisation, respectively, in the above cases either provide only low security standards by using static passwords that may be obtained from a fixed or mobile network the user has already subscribed to, or a temporary password is sent to the user via a short messaging service (SMS) by a mobile network operator of the user whenever the user accesses a WLAN, which requires the user to be in an area covered by the mobile/radio network.

Further solutions propose to use a subscriber identification module (SIM) such as a SIM card known e.g. from GSM mobile phones. These solutions are not economic since they require hardware changes of a WLAN access device in the terminal. Furthermore, the SIM card approach cannot be used with fixed network operators.

Therefore, it is an object of the present invention to provide an improved method of accessing a target network such as the internet via a WLAN and to provide an authentication module for supporting said improved method of accessing a target network.

This object is achieved by a method comprising the features of claim 1 and by an authentication module according to claim 8.

The method according to the present invention suggests to provide cryptographic keys within said terminal, wherein said cryptographic keys e.g. may be an RSA key pair consisting of a first, private key and of a second, public key, cf. Rivest, R.L., Shamir, A., and Adleman, L., "A Method for Obtaining Digital Signatures and Public-Key Cryptosystems", Comm. ACM, February 1978, Vol. 21, No. 2, pp. 120-126.

According to the invention said keys are used to generate a signature within said terminal. The signature depends on said first and second key and is sent to a first network element of a WLAN the user wants to access. Said first network element may e.g. be an access controller of said WLAN.

To avoid so-called replay attacks, it is also possible to create said signature such that it depends on a secret value that is shared between said first network element and said terminal and that is only used once, which increases the security.

Together with the signature, the public key is sent from the terminal to the access controller, so that the access controller is enabled to verify that the terminal or its user, respectively, does also own the private key associated to said public key.

In this case, that is, if said verification yields a positive result, the access controller sends identification information related to said user to a second network element, which may be located within then WLAN or in the target network, i.e. the internet or in any other network that can be accessed by the WLAN's access controller, and which may be an access server.

Said identification information may comprise any user related data that enables the access server to check whether said user has a subscription for a service such as internet access from a WLAN or the like. For example, the access server may be sent the user's public key which may be looked up in a table of the access server. The table may e.g. contain user subscription information and the respective public key, address information, billing information and the like.

If the identification information, that is e.g. the public key, has successfully been checked within the access server, i.e. if the access server has found a user subscription entry in its table which entry is related to said public key, the access from the terminal to said WLAN and further to the desired target network, i.e. the internet, is authorised. The process of authorisation may be accomplished by sending a corresponding message from the access server to the access controller of the WLAN.

A very advantageous embodiment of the present invention proposes password protecting at least said first key, i.e. the private key, within said terminal so as to prevent unauthorised users to use another user's private key to access the WLAN or the target network.

While roaming from e.g. one WLAN to another WLAN, said password may temporarily be saved within the terminal, and for each initial access to a new WLAN's access controller, the above mentioned method of accessing may be performed without requiring the user to re-enter the password again. By temporarily saving the password in the terminal, it is possible to access the user's private key within the terminal every time a new WLAN or WLAN access point or WLAN access controller, respectively, is accessed so that the above verification and authorisation procedure is transparent to the user. Consequently, even when roaming between different WLANs, the user has to enter the password only once while initiating the access session.

A further advantageous embodiment of the present invention is characterized by employing an existing signalling mechanism, in particular RADIUS signalling and or DIAMETER signalling, for sending said identification information to said access server and/or for authorising the access of the terminal to the WLAN. RADIUS signaling itself is known from prior art, cf. IETF (internet engineering task force) RFC 2058, RFC 2138, RFC 2865, as well as DIAMETER signalling.

For instance, an attribute field of a so-called access-request message of said RADIUS protocol may be used to carry the public key or other identification information. Apart from defining a new type of attribute when using said access-request message, no further modifications of existing signalling systems are required, i.e. the method according to the present invention can be performed without substantial changes of an existing networking infrastructure. Any other existing signalling mechanism which offers such a possibility can be used, too.

At the same time, the method according to the invention provides a high security level, because only a public key and a corresponding signature is exchanged via the WLAN radio interface in contrast to e.g. sending a static password or the like via the radio interface as known from prior art. Furthermore, the user is authenticated by the terminal, and the terminal is authenticated by the WLAN's access controller.

According to a further inventive solution, the steps of sending the signature and the public key from the terminal to the access controller of the WLAN are be performed by using the SSL (secure sockets layer) protocol and/or X509 certificates, both of which are per se known from prior art. The SSL (secure sockets layer) protocol and/or X509 certificates can also be used for a communication between said terminal and a registration server, which is described in detail below.

According to another advantageous embodiment of the present invention, standard features of Internet browsers are used for carrying out operations performed by said terminal, in particular for providing said cryptographic keys and/or password protection of said keys in said terminal and/or user authentication via said password protection and/or sending said signature and said second key to said access controller.

A further solution to the object of the present invention is embodied by an authentication module, e.g. for use within an access server. Said authentication module comprises a table for storing subscription information, means for checking received identification information with said subscription information for compatibility and authorising means for sending an authorisation signal, i.e. to an access controller. Said authorisation signal is only sent if said checking yields a positive result, e.g. if said received identification information corresponds to an entry of said table holding the subscription information.

In the other case, if no entry of subscription information is found which corresponds to said identification information, no authorisation signal is sent.

Further advantages and details are presented in the following detailed description with reference to the drawings.
- Fig. 1: shows a flow chart depicting the steps of a first embodiment of the method according to the present invention,
- Fig. 2: shows a network access scenario,
- Fig. 3: shows an access process according to Fig. 1 in detail,
- Fig. 4a: shows a simplified user registration process to a WLAN,
- Fig. 4b: shows a detailed user registration process to a WLAN, and
- Fig. 4c: shows an access scenario based on a further embodiment of the present invention.

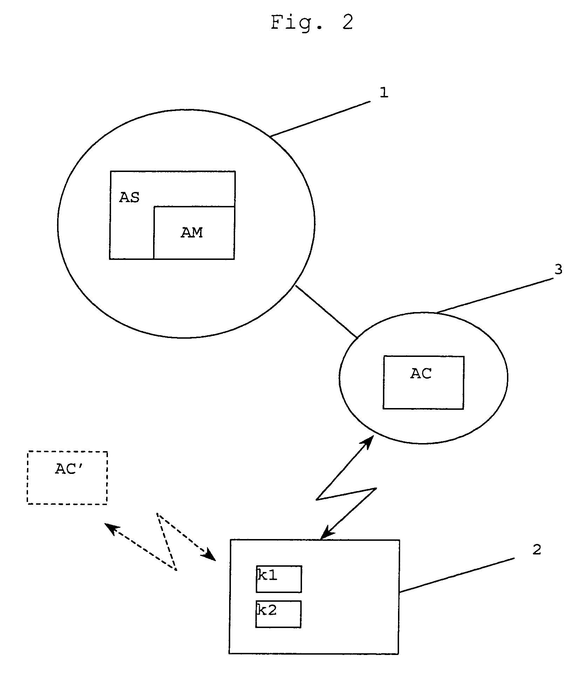

Figure 2 shows a wireless local area network (WLAN) 3, which comprises an access controller AC for controlling the access of terminals 2 to the WLAN 3.

A user of said terminal 2 may desire to access a target network 1 such as e.g. the internet via said WLAN 3. For this purpose, he uses the terminal 2 for accessing a WLAN 3 by contacting the WLAN's access controller AC. The user may also be roaming around and may access the internet 1 via another WLAN (not shown) by contacting a further access controller AC'.

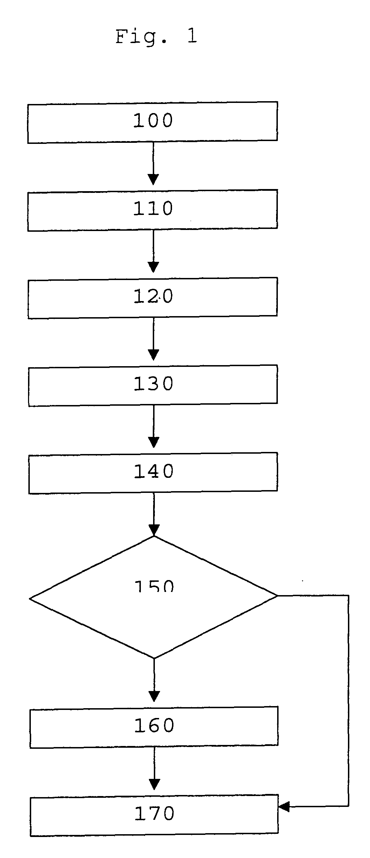

To verify within said WLAN 3 that said user is authorised to access the internet 1 via the WLAN 3, which is inter alia important for billing purposes, the following access procedure depicted in Figure 1 is performed:

Initially, two cryptographic keys k1, k2 forming an RSA key pair are provided within said terminal 2 in step 100. The first key k1 is a private key and the second key k2 is a public key of said RSA key pair. Both keys k1, k2 or at least the private key k1 is password protected within the terminal 2 so as to prevent unauthorised users from access to the respective keys.

By using these two keys k1, k2, in step 110 a signature is created within said terminal 2 which depends on said two keys k1, k2, as well as on a secret value that is only shared by the access controller AC and the terminal and that is only used once. After that, said signature and the public key k2 is sent to the access controller of the WLAN 3 via a radio interface that is symbolised in Figure 2 by a double arrow. Said sending is performed in step 120 of Figure 1.

After receiving said signature and the public key k2, the access controller AC of the WLAN 3 verifies said signature in step 130 to determine whether said terminal 2 or its user, respectively, owns the private key k1 corresponding to the public key k2 and said signature. By doing so, the access controller AC authenticates the user.

If said authentication fails, e.g. if said signature does not correspond to the cryptographic keys k1, k2, further access of said terminal 2 to said WLAN 3 is denied.

In contrast, after a valid authentication, the access controller AC sends identification information comprising the public key k2 to an access server AS of the internet 1 in step 140. An authentication module AM of said access server AS comprises subscription information which relates subscribed users to corresponding identification information. It is sufficient if said identification information is identical to said public key k2.

Said identification information is checked for compatibility with said subscription information within said authentication module AM, i.e. whether a table comprising said subscription information has an entry which has the same public key k2 as received form the access controller AC of the WLAN 3. This is done within step 150 of Figure 1.

In this case, in step 160 the access of the terminal 2 to the internet 1 is authorised by the authentication module AM. Otherwise, the authentication process ends in step 170 without authorisation.

The respective messages which carry the identification information from the access controller AC to the access server AS and/or the authorisation signal from the access servers' authentication module AM to the access controller AC are access-request messages of the well known RADIUS protocol. In particular, the identification information or the public key k2, respectively, is stored within said access-request message in an attribute field that may carry 254 Bytes at maximum, which is sufficient for state of the art key lengths of cryptographic keys.

After said authorisation, the terminal 2 can access the internet 1 via the WLAN 3.

The access server AS is not required to be within said target network 1 as long as it can be accessed from the WLAN 3.

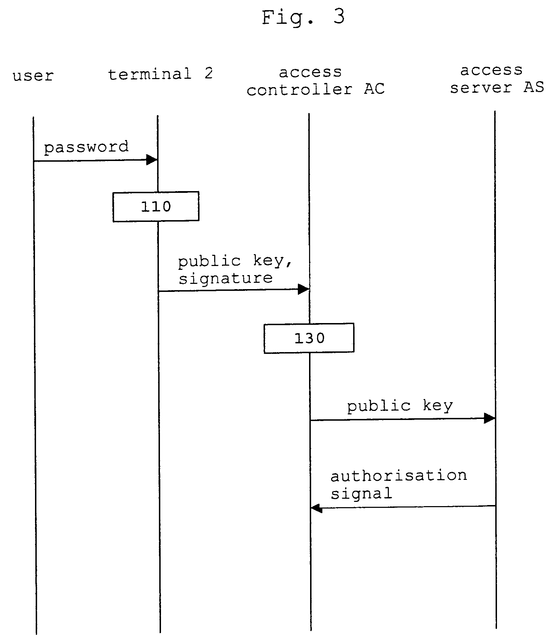

A further illustration of the above method is given by Figure 3, which presents the network elements used within the above explained access scenario: the user, the terminal 2, the access controller AC, and the access server AS which in this figure is supposed to comprise the authentication module AM explicitly shown in Figure 2.

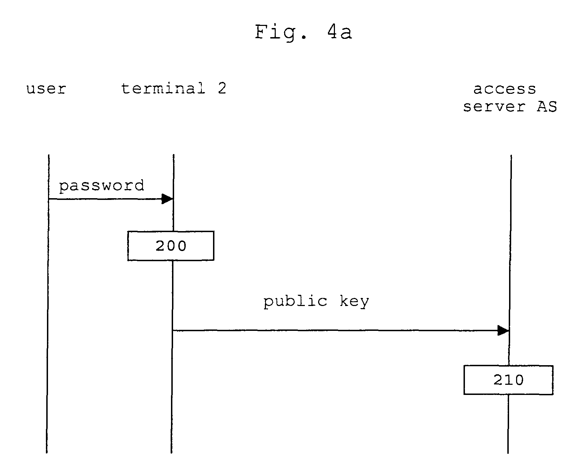

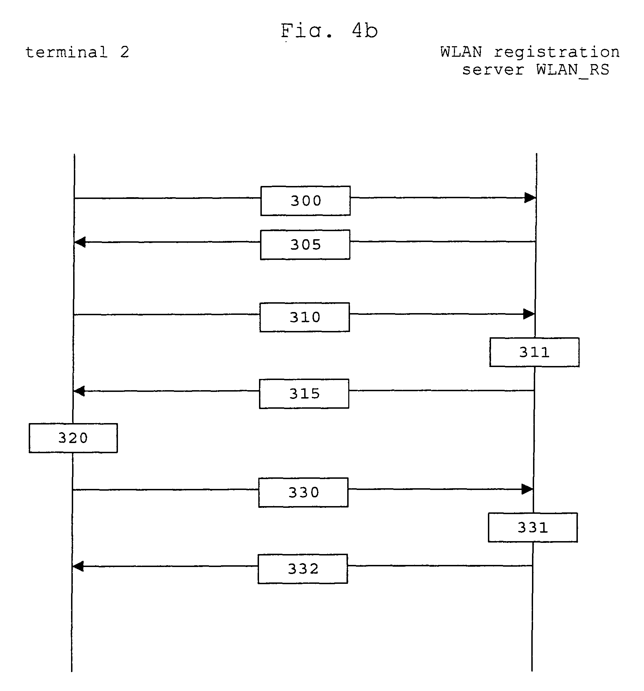

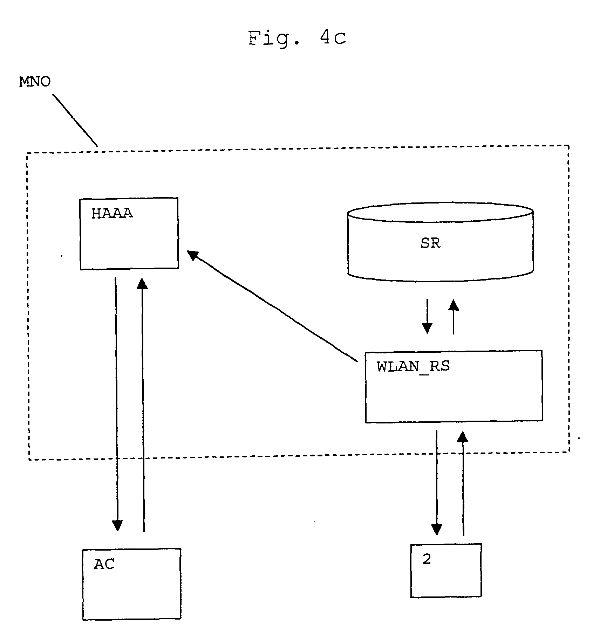

Fig. 4a schematically depicts a WLAN registration phase, i.e. a process in which a user enhances its subscription at his network operator to WLAN access, in which the user first enters a password into the terminal 2. After that, an RSA key pair is generated within said terminal 2 in step 200, and the keys k1, k2 (Fig. 2) are stored in the terminal 2, wherein at least said private key k1 is password protected within said terminal 2.

The public key k2 is subsequently sent from the terminal 2 to an access server AS, and said access server AS stores, in step 210, said public key k2 in a table comprising subscription information. This enables the access server AS - upon receiving identification information - to check for compatibility said received identification information with said subscription information.

In other words, the access server initially stores the public key k2 or any other suitable identification information related to said user in step 210, and after that, any network element being able to contact said access server AS, for example an access controller AC of a WLAN 3 (Figure 2), can initiate a verification procedure of e.g. a public key k2 in said access server AS which may be used for determining whether a user is already a subscriber of certain network services such as WLAN access to the internet.

A further variant of a WLAN registration phase is described in detail with reference to Fig. 4b.

In step 300, the user accesses a web site of his mobile network operator where he can activate a link (not shown) to a web page which is provided for an initial WLAN registration of the user. Said web site is provided within a WLAN registration server of the network operator.

Upon activating said web page for WLAN registration, a https session is invoked for authenticating the WLAN registration server to the terminal's user.

In step 305, an authentication form is sent from the WLAN registration server to the terminal 2 which requires e.g. the first and last name, a date of birth and other information corresponding to the user to be entered and submitted to the WLAN registration server. This is necessary to identify the user and to determine whether the user is already registered to the network considered to be his home network. In addition to the first and last name, other user-specific information such as an address, a SIM (subscriber identification module) card number, a MSISDN (mobile station ISDN number), an amount of a last bill, a customer number and so on may be asked for by the authentication form.

In step 310, said authentication form with user-specific data filled in is sent to the WLAN registration server that retrieves a corresponding user subscription and thus authenticates the user thereupon in step 311.

After a successful authentication of the user within the WLAN registration server, a WLAN subscription form is sent to the user's terminal 2 by the WLAN registration server in step 315.

The WLAN subscription form asks the user to enter a string password. Upon submitting the form in step 320 of Figure 4b, various operations are triggered:

Firstly, an RSA key pair is generated and stored in the terminal 2 by the web browser that is used for accessing the WLAN registration server web site. Secondly, the private key k1 is password protected in the terminal 2, and thirdly, the public key k2, the string password and a signature generated by means of said RSA key pair is sent to the WLAN registration server in step 330.

The RSA key pair generation can e.g. be realised by using a "<KEYGEN>"- HTML (hypertext markup language) tag in said WLAN subscription form which is supported by many current web browsers such as netscape communicator version 3 or 4.

After that, in step 331, the WLAN registration server checks the signature and the format of the string password and then issues a signed certificate based on the information contained in said authentication form and said WLAN subscription form. Said certificate is sent to the user in step 332.

Finally, the user can install the certificate by means of an import-function of the terminal's web browser. At this stage, the terminal 2 is equipped with a user certificate that can be used in combination with the string password previously defined to authenticate the user whenever a WLAN is accessed. Thus, the terminal 2 is WLAN enabled.

In order to enable further terminals for WLAN access by the above explained method, it is necessary to perform the registration process for each terminal. Nevertheless, the user may choose the same string password for each terminal's registration.

To allow a user to subscribe to the WLAN service "just in time", i.e. exactly when WLAN access is required, a WLAN access controller must provide an open port in its firewall to enable the user to access the registration web site of the WLAN registration server of his home network via the WLAN.

The following explanations describe a typical WLAN access phase from a user's point of view.

In a first step, when a user tries to access the internet 1 via the WLAN 3 (Fig. 2), an access controller AC of said WLAN 3 intercepts a corresponding request issued by the terminal 2. The request may e.g. be an HTTP, telnet or an ftp request.

After interception of said request, the access controller AC of the WLAN 3 initiates an SSL connection with the terminal 2. Subsequently, the web browser of the terminal 2 prompts the user for a password that protects a database of private keys k1 stored in the terminal 2, wherein said private keys k1 correspond to public keys k2 that are part of any certificate issued for said terminal 2.

After receiving the password, the browser retrieves a private key k1 assigned to a certificate which is to be sent to the access controller AC of the WLAN 3 and uses said private key k1 to sign some preferably random data common to itself and the access controller AC of the WLAN 3. This signature is an evidence that the terminal 2 owns said private key k1.

The signature is sent from the terminal 2 to the access controller AC together with the certificate, and after that the access controller AC checks the validity of the signature. By doing so, the access controllers AC authenticates the terminal 2 or its user, respectively, and assures that the terminal/user is not impersonating the owner of the certificate.

In a next step, it is checked whether user data of the certificate is assigned to a valid subscriber identification. This is done by sending the public key k2 of the certificate to an access server AS of the user's network operator, in which an authentication module AM is provided for looking up subscription information that corresponds to the public key k2.

The public key k2 is sent from the access controller AC of the WLAN 3 to the access server AS or its authentication module AM by RADIUS signalling, wherein an attribute data field of an access-request message is used to store the public key k2.

If the authentication module locates an entry of said subscription information corresponding to said received public key k2, the user is identified as already being a subscriber and consequently, an authorisation signal is returned from the authentication module AM to the access controller AC of the WLAN 3.

Said authorisation signal can also be sent by using RADIUS signalling.

Upon receiving said authorisation signal, the access controller AC of said WLAN 3 closes the SSL session previously invoked and resumes the initial internet access attempted by the user.

A further embodiment of the present invention is explained below with reference to Figure 4c, which depicts an access scenario from a WLAN to a target network from a mobile network operator's view.

As can be seen, in a mobile network operator's domain MNO, it is provided a home authentication and authorisation authority HAAA which comprises, inter alia, an authentication module as presented in Fig. 2.

Additionally, said domain MNO comprises a subscriber repository SR which comprises subscription information of the mobile network's users. A WLAN registration server WLAN_RS is also provided within said domain MNO.

A user of terminal 2 may access said WLAN registration server WLAN_RS either directly or via an access controller AC of a WLAN for subscribing to WLAN services of the mobile network operator which enable the user e.g. to access the internet as a target network from a WLAN connected to said mobile network operator's domain MNO.

Since critical information is exchanged between the terminal 2 and the WLAN registration server WLAN_RS during said process of subscribing, a HTTPS session with server authentication is used. The user authenticates himself e.g. by completing a web registration form he is sent by the WLAN registration server WLAN_RS. For the purpose of determining whether said user is already owner of a subscription at the domain MNO, said WLAN registration server WLAN_RS contacts said subscriber repository SR of the domain MNO and locates subscription information corresponding to user data which has previously been filled into said web registration form.

If subscription information related to said user is found within said subscriber repository SR, a signed certificate is created within said WLAN registration server WLAN_RS and is sent to the user's terminal 2. A public key k2 is then sent to said home authentication and authorisation authority HAAA where a new entry comprising said public key k2 is created.

From this time, whenever said user attempts to authenticate to a WLAN, the WLAN's access controller AC sends a public key k2 of said user to said home authentication and authorisation authority HAAA via RADIUS signalling, in particular by using an access-request message of said RADIUS protocol. If a copy of said public key k2 is found at said home authentication and authorisation authority HAAA, the user is identified as a valid subscriber and an authorisation signal is returned from said home authentication and authorisation authority HAAA to said access controller AC of the WLAN, which can also be performed by RADIUS signalling thus employing an existing network protocol infrastructure.

A further embodiment of the present invention is
characterized by being compatible to an authentication based on a static password. According to this embodiment, an initial access of a terminal 2 to a target network 1 via a WLAN 3 is blocked by an access controller AC of said WLAN 3, and subsequently said access controller AC initiates an SSL session with the terminal 2.

During a handshake sequence of said SSL session, the access controller AC sends a CERTIFICATE_REQUEST message to the terminal 2 thus requesting a valid certificate from said terminal 2.

If no suitable certificate is available in the terminal 2, e.g. because said terminal 2 has not performed one of the above mentioned WLAN registration processes prior to accessing said target network 1 via said WLAN 3, the terminal 2 issues a NO_CERTIFICATE_ALERT message which is a signal for the access controller AC that said terminal 2 cannot provide a valid certificate and hence cannot perform a certificate-based authentication procedure.

The access controller AC may deny any further accesses of said terminal 2 to the WLAN 3 or to the target network 1, respectively, e.g. by closing the SSL session with sending a FATAL_HANDSHAKE-FAILURE_ALERT message, but to maintain compatibility with static password authentication procedures, it is also possible for the access controller AC to send a user login web page to the terminal 2 which only requires a static password to be filled in by the user of the terminal 2. Upon receiving a correct password from the terminal 2, access to the WLAN 3 or the target network 1 may be granted by the access controller AC.

The method according to the present invention works in all three cases: if the user accessing the WLAN 3 is a subscriber of
a) an administrative domain owning said WLAN 3,
b) a fixed network operator or
c) a mobile network operator.

The inventive method of accessing a target network can be implemented within or without an existing EAP (extensive authentication protocol) framework. An implementation without an EAP framework has various advantages in that there are no specific requirements regarding the terminals 2. A laptop or a PDA with a standard web browser is sufficient to handle the authentication procedure based on user certificates and SSL sessions as described above. Additionally, a new communication protocol is not required since the described method relies on existing SSL and RADIUS mechanisms.

As compared to a static password authentication procedure, the method according to the present invention offers an improved security level: the user of a terminal is authenticated by the terminal, and the terminal is authenticated by the network, i.e. the WLAN 3.

As a further advantage, the proposed method provides a good ease of use for terminal users, and re-authentication when roaming between different WLAN access points can be transparent to the user due to temporarily storing the user's password in the terminal 2.

Finally, there are no specific requirements for the access server, the functionality provided by a standard RADIUS AAA (authentication and authorisation authority) server is sufficient to perform the proposed method.

According to a further embodiment of the present invention, the first network element, i.e. the access controller AC, requests identification information from the terminal 2, and thereupon said terminal 2 sends the public key and the signature to the second network element, i.e. the access server, which performs both authentication and authorisation of said terminal 2.

According to a further embodiment of the present invention, the first and second network elements may be identical, i.e. integrated in a combined network element.

Optionally, a secret value common to the terminal and the first network element may additionally be used to create the signature to improve security. Said secret value may also be provided by the first or the second network element.

## Claims

1. Method of accessing a target network (1) with a terminal (2) via an access network (3), in particular a wireless local area network (WLAN) (3), comprising the following steps:
- providing (100) in said terminal (2) cryptographic keys comprising at least a first key (k1), in particular a private key, and a second key (k2), in particular a public key,
- generating (110) in said terminal (2) a signature depending on at least said first key (k1),
- sending (120) said signature and said second key (k2) to a first network element (AC), in particular an access controller (AC), of said access network (3),
- verifying (130) said signature within said access controller (AC),
- sending (140) identification information, which preferably depends on said second key (k2), from said first network element (AC) to a second network element (AS), in particular an access server (AS), comprising subscription information,
- checking (150) said identification information for compatibility with said subscription information within said second network element (AS),
- authorising (160) the access of the terminal (2) to said access network (3) and/or to said target network (1), if said step of checking (150) yields a positive result.

2. Method according to claim 1, **characterized by** password protecting at least said first key (k1) within said terminal (2) and/or by creating said signature such that it depends on a secret value that is shared only between said first network element (AC) and said terminal (2) and that is only used once.

3. Method according to claim 1, 2 or 3, wherein said cryptographic keys (kl, k2) are RSA keys.

4. Method according to one of the preceding claims, **characterized by** employing an existing signalling mechanism, in particular RADIUS signalling and or DIAMETER signalling, for sending (140) said identification information to said access server (AS) and/or for authorising (160) the access of the terminal (2) to the access network (3).

5. Method according to one of the preceding claims, **characterized by** using the SSL protocol and/or X509 user certificates for a communication between said terminal (2) and said access controller (AC) and/or between said terminal (2) and a registration server.

6. Method according to one of the preceding claims, **characterized in that** said identification information is said second key (k2).

7. Method according to one of the preceding claims, **characterized by** using standard features of Internet browsers for carrying out operations performed by said terminal (2), in particular for providing said cryptographic keys and/or password protection of said keys in said terminal (2) and/or user authentication via said password protection, sending (120) said signature and said second key (k2) to said access controller (AC).

8. Authentication module (AM) comprising a table for storing subscription information, means for checking received identification information with said subscription information for compatibility and authorising means for sending (160) an authorisation signal.

9. Authentication module (AM) according to claim 8, wherein said identification information and/or said authorisation signal can be received/sent via an existing signalling mechanism, in particular via RADIUS signalling and/or DIAMETER signalling.

10. Authentication module (AM) according to claim 8 or 9, wherein said subscription information and/or said received identification information is a cryptographic key or comprises a cryptographic key.
